(19) Europäisches Patentamt / European Patent Office / Office européen des brevets

(11) **EP 2 241 594 B1**

(12) **EUROPEAN PATENT SPECIFICATION**

| | |
|---|---|
| (45) Date of publication and mention of the grant of the patent: **12.03.2014  Bulletin 2014/11** | (51) Int Cl.: **C08L 1/10** (2006.01)   **C08J 5/18** (2006.01) **C08K 5/11** (2006.01)   **C08L 67/02** (2006.01) |
| (21) Application number: **09704154.5** | (86) International application number: **PCT/JP2009/050361** |
| (22) Date of filing: **14.01.2009** | (87) International publication number: **WO 2009/093503 (30.07.2009 Gazette 2009/31)** |

(54) **CELLULOSE RESIN COMPOSITION AND CELLULOSE RESIN FILM**

CELLULOSEHARZZUSAMMENSETZUNG UND CELLULOSEHARZFOLIE

COMPOSITION DE RÉSINE DE CELLULOSE ET FILM DE RÉSINE DE CELLULOSE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **23.01.2008  JP 2008012556**

(43) Date of publication of application:
**20.10.2010  Bulletin 2010/42**

(73) Proprietor: **Adeka Corporation Tokyo 116-0012 (JP)**

(72) Inventors:
• **HARADA, Masashi**
  **Saitama-shi**
  **Saitama 336-0022 (JP)**
• **YAMAZAKI, Yuji**
  **Saitama-shi**
  **Saitama 336-0022 (JP)**

(74) Representative: **Jones, Helen M.M.**
**Gill Jennings & Every LLP**
**The Broadgate Tower**
**20 Primrose Street**
**London EC2A 2ES (GB)**

(56) References cited:
**JP-A- 2001 122 979     JP-A- 2001 122 979
JP-A- 2002 022 956     JP-A- 2006 219 649
JP-A- 2007 186 545**

**Description**

TECHNICAL FIELD

The present invention relates to a cellulose resin composition and cellulose resin film. Particularly, the present invention relates to a cellulose resin composition and cellulose resin film which are suitably used for a polarizing plate and protective film for polarizing plate.

BACKGROUND ART

Compared to other synthetic resins, cellulose resins are mainly characterized by generally having a superior strength, transparency and gloss, as well as a smoother surface with excellent texture. Because of this, cellulose resins are used in a wide variety of applications, for example, sheets, films, wire coatings, toys, medical instruments, food packaging materials and the like.

However, since cellulose resins are not thermoplastic, there has been problems in that these resins, when molding, have to be melted at a high temperature or dissolved into a solvent, and that in cases where they are melted at a high temperature, they are simultaneously thermally decomposed and become colored. Therefore, in order to avoid such problems, it is necessary to blend an appropriate plasticizer which lowers the softening point of the cellulose resin. Examples of conventionally used plasticizer include triphenyl phosphate, tricresyl phosphate, diphenyl phosphate, triethyl phosphate, tributyl phosphate, dimethyl phthalate, diethyl phthalate, dimethoxyethyl phthalate, ethyl phthalyl ethyl glycolate, butyl phthalyl butyl glycolate, toluenesulfonamide, triacetin and pentaerythritol tetraacetate.

However, at present, none of the aforementioned plasticizers satisfies a wide range of performances such as compatibility with cellulose resins, plasticizing efficiency, non-volatility, stability against heat and light, non-migratory property, non-extractability and water resistance, and this is discouraging a further expansion of the use of cellulose resin compositions.

In view of this, a plasticizer having a hydrocarbon ring was proposed in Patent Document 1 and an ester compound of polyalcohol having different alkyl groups and aryl groups was proposed in Patent Document 2; however, these were not satisfactory.

In addition, recent years have seen the development in thinning and weight reduction of information devices equipped with a liquid crystal display such as laptop computers. At the same time, the demands for even thinner polarizing plate protective film used in liquid crystal displays have increased.

Meanwhile, conventionally, cellulose triacetate films have been commonly and widely used for a polarizing plate protective film, and a plasticizer has been added to such cellulose triacetate films in order to improve the film flexibility and to reduce the moisture permeability.

However, there have been cases where simple thinning of the aforementioned cellulose triacetate film increased the moisture permeability of the film and made it impossible to sufficiently reduce the moisture, thereby deteriorating the adhesive and polarizer when the film was made into a polarizing plate. As the solution to this problem, it can be considered to increase the amount of the plasticizer to compensate the amount reduced by the thinning; however, a mere increase in the amount of the plasticizer does not enable a sufficient improvement in the moisture permeability, and it has been found that such an increase in the amount of the plasticizer causes new problems, such as deterioration in the retainability. Here, deterioration in the retainability refers to a property in which the film mass is decreased by precipitation, evaporation and the like of the additive such as plasticizer to the outside of the film under a high temperature and humid environment. This retainability is poor in conventional cellulose ester films, resulting in a decrease in the performance of liquid crystal displays.

In view of the above, as the technique to improve these defects, Patent Document 3 proposes the use of citrate, while the use of pentaerythritol ester and dipentaerythritol is proposed in Patent Document 4. In addition, Patent Document 5 proposes the use of glyceride, while the use of diglycerol ester is proposed in Patent Document 6.

Patent Document 1: Japanese Unexamined Patent Application Publication No. 53-40039
Patent Document 2: Japanese Unexamined Patent Application Publication No. 54-71141
Patent Document 3: Japanese Unexamined Patent Application Publication No. 11-92574
Patent Document 4: Japanese Unexamined Patent Application Publication No. 11-124445
Patent Document 5: Japanese Unexamined Patent Application Publication No. 11-246704
Patent Document 6: Japanese Unexamined Patent Application Publication No. 2000-63560

DISCLOSURE OF THE INVENTION

PROBLEMS TO BE SOLVED BY THE INVENTION

Yet, although cellulose ester films having a good optical anisotropy can be obtained by using the cellulose resin compositions according to Patent Documents 3 to 6, none of them exhibited a sufficient moisture-permeability improving effect and deterioration in the retainability was observed as well.

Therefore, an object of the present invention is to provide a cellulose resin composition and cellulose resin film which prevent deterioration in the retainability and have a superior moisture permeability.

MEANS FOR SOLVING THE PROBLEMS

In order to solve the aforementioned problems, the present inventors intensively studied to discover that the aforementioned object can be attained by adding to cellulose resin a specific polyester plasticizer which contains a polybasic acid having an aromatic dicarboxylic acid and uses an ether-alcohol as the stopper, thereby completing the present invention.

That is, the cellulose resin composition according to the present invention is a cellulose resin composition, which is obtained by adding (A) polyester plasticizer to a cellulose resin, wherein the aforementioned (A) polyester plasticizer is obtained by allowing a polybasic acid, polyalcohol and ether-alcohol to react and 10 to 70 mol% of the aforementioned polybasic acid is an aromatic dicarboxylic acid.

Further, in the cellulose resin composition according to the present invention, it is preferred that the mass ratios of the aforementioned polybasic acid, polyalcohol and ether-alcohol in the aforementioned (A) polyester plasticizer be 10 to 80 mass%, 10 to 80 mass% and 1 to 50 mass%, respectively, and that the aforementioned (A) polyester plasticizer be added in an amount of 3 to 50 parts by mass with respect to 100 parts by mass of the aforementioned cellulose resin.

Furthermore, in the cellulose resin composition according to the present invention, it is preferred that the aforementioned cellulose resin be cellulose triacetate.

The cellulose resin film according to the present invention is obtained from the aforementioned cellulose resin composition.

EFFECTS OF THE INVENTION

According to the present invention, a cellulose resin composition and cellulose resin film which prevent deterioration in the retainability and have a superior moisture permeability can be provided.

BEST MODE FOR CARRYING OUT THE INVENTION

The embodiments of the present invention will be described concretely.

The cellulose resin used in the present invention is not particularly restricted; however, it is preferably a lower fatty acid ester of cellulose (hereinafter, also referred to as "cellulose ester"). The lower fatty acid in the lower fatty acid ester of cellulose refers to a fatty acid having not more than 6 carbon atoms. Examples of such lower fatty acid esters of cellulose include cellulose acetate, cellulose propionate, cellulose butyrate and the like, as well as mixed fatty acid esters such as cellulose acetate propionate and cellulose acetate butyrate that are described in Japanese Unexamined Patent Application Publication No. 10-45804, Japanese Unexamined Patent Application Publication No. 8-231761, the Description of U.S. Patent No. 2, 319, 052 and the like. Among these lower fatty acid esters of cellulose, cellulose triacetate is more preferably used.

With regard to such cellulose triacetate, from the standpoint of the film strength, those having a polymerization degree of 250 to 400 and an average acetylation degree (an amount of bound acetic acid) of 54.0% to 62.5% are preferred, and those having an average acetylation degree of 58.0% to 62.5% are more preferred.

A particularly preferred lower fatty acid ester of cellulose is a cellulose ester which has a $C_2$ to $C_4$ acyl group as the substituent and simultaneously satisfies the following formulae (I) and (II):

Formula (I):          $2.6 \leq X + Y \leq 3.0$,

and

Formula (II):          $0 \leq X \leq 2.5$,

wherein, X represents the substitution degree of the acetyl group and Y represents the substitution degree of the propionyl group or butyryl group. Those moieties which are not substituted with an acyl group generally exist as a hydroxyl group.

Further, it is especially preferred that the aforementioned lower fatty acid ester of cellulose be a cellulose acetate propionate. Among the cellulose acetate propionates, those satisfying $1.9 \leq X \leq 2.5$ and $0.1 \leq Y \leq 0.9$ are more preferred, and these cellulose esters can be synthesized by a known method.

Moreover, as the cellulose ester in the present invention, cellulose esters synthesized using raw material such as cotton linter, wood pulp or kenaf may be used individually or in combination. It is particularly preferred to use a cellulose ester synthesized from cotton linter (hereinafter, may be simply referred to as linter) individually or in combination.

In the present invention, the (A) polyester plasticizer is obtained from a polybasic acid, polyalcohol and ether-alcohol. As such polybasic acid, for example, aliphatic dibasic acids such as malonic acid, succinic acid, glutaric acid, adipic acid, sebacic acid, azelaic acid and dodecane dicarboxylic acid are used individually or in combination. In addition, a small fraction of an aromatic polybasic acid, such as phthalic acid, isophthalic acid, terephthalic acid, trimellitic acid or pyromellitic acid, or an aliphatic polybasic acid, such as butane tricarboxylic acid, tricarballylic acid or citric acid, may also be used.

Further, in the present invention, 10 to 70 mol%, preferably 20 to 50 mol% of such polybasic acid component is an aromatic dicarboxylic acid. Examples of such aromatic dicarboxylic acid include phthalic acid, isophthalic acid, terephthalic acid, naphthalene dicarboxylic acid and these aromatic dicarboxylic acids substituted with a lower alkyl group. By using an appropriate amount of such aromatic dicarboxylic acid, the moisture permeability can be improved considerably.

Furthermore, as the polyalcohol in the present invention, for example, aliphatic glycols such as ethylene glycol, diethylene glycol, 1,2-propanediol, 1,3-propanediol, 2-methyl-1,3-propanediol, 2,2-dimethyl-1,3-propanediol, 2,2-diethyl-1,3-propanediol, 1,2-butanediol, 1,3-butanediol, 1,4-butanediol, 1,5-pentanediol, 1,5-hexanediol, 1,6-hexanediol, 3-methyl-1,5-pentanediol, 2-ethyl-1,3-hexanediol and 2,2,4-trimethyl-1,3-pentanediol are used individually or in combination. In addition, a small fraction of polyalcohols such as glycerin, trimethylolpropane, trimethylolethane and pentaerythritol may also be used.

Moreover, examples of the ether-alcohol in the present invention include ethylene glycol monomethyl ether, diethylene glycol monomethyl ether, triethylene glycol monomethyl ether, polyethylene glycol monomethyl ether, ethylene glycol monoisopropyl ether, diethylene glycol monoisopropylene glycol, triethylene glycol monoisopropylene glycol, ethylene glycol mono-n-butyl ether, diethylene glycol mono-n-butyl ether, triethylene glycol mono-n-butyl ether, ethylene glycol monoisobutyl ether, diethylene glycol monoisobutyl ether, ethylene glycol monohexyl ether, diethylene glycol monohexyl ether, ethylene glycol mono-2-ethylhexyl ether, diethylene glycol mono-2-ethylhexyl ether, ethylene glycol monophenyl ether, ethylene glycol monobenzyl ether, diethylene glycol monobenzyl ether, propylene glycol monomethyl ether, dipropylene glycol monomethyl ether, tripropylene glycol monomethyl ether, propylene glycol mono-n-propyl ether, dipropylene glycol mono-n-propyl ether, propylene glycol mono-n-butyl ether, dipropylene glycol mono-n-butyl ether, tripropylene glycol mono-n-butyl ether and propylene glycol monophenyl ether. Such ether-alcohols are used as a stopper.

The aforementioned (A) polyester plasticizer can be produced by a well-known method, for example, by using the aforementioned polybasic acid, the aforementioned polyalcohol and the aforementioned ether-alcohol in the presence of a catalyst such as dibutyltin oxide or tetra-alkyl titanate. The ratio of each aforementioned component used in the production varies depending on, for example, the type of the component used, the desired characteristics of the polyester plasticizer and its molecular weight; however, in general, a polybasic acid, particularly an aliphatic polybasic acid, is used at a ratio of 10 to 80 mass%, while a polyalcohol and ether-alcohol are used at a ratio of 10 to 80 mass% and 1 to 50 mass%, respectively.

Suitable examples of the polyester plasticizer used in the present invention are concretely shown in Tables 1 and 2 below. In Table 1, AV, OHV, Mw and the numbers in parentheses under the mixture names represent acid value, hydroxyl value, molecular weight and molar ratio, respectively. Further, in Table 2, the values in parentheses indicate the ratio of polybasic acid, polyalcohol and ether-alcohol of the polyester plasticizers shown in Table 1, and the units are all in mass%.

[Table 1]

|  | Polybasic acid | Polyalcohol | Ether-alcohol | AV | OHV | Mw |
|---|---|---|---|---|---|---|
| No.1 | Succinic acid / Phthalic acid (70/30) | Ethylene glycol | Ethylene glycol monobutyl ether | 0.3 | 15 | 3000 |
| No.2 | Succinic acid / Phthalic acid (70/30) | Ethylene glycol | Diethylene glycol monobutyl ether | 0.3 | 13 | 3000 |
| No.3 | Succinic acid / Phthalic acid (70/30) | Ethylene glycol | dipropylene glycol monometyl ether | 0.3 | 9 | 3000 |

(continued)

| | | Polybasic acid | Polyalcohol | Ether-alcohol | AV | OHV | Mw |
|---|---|---|---|---|---|---|---|
| | No.4 | Adipic acid / Terephthalic acid (70/30) | Ethylene glycol | Diethylene glycol monobutyl ether | 0.4 | 13 | 3000 |
| | No.5 | Succinic acid / Phthalic acid (70/30) | Ethylene glycol / Propylene glycol (50/50) | Diethylene glycol monobutyl ether | 0.4 | 8 | 3000 |
| | No.6 | Succinic acid / Adipic acid / Phthalic acid (30/30/40) | Ethylene glycol | Diethylene glycol monobutyl ether | 0.2 | 9 | 3000 |

[Table 2]

| | | Polybasic acid | Polyalcohol | Ether-alcohol |
|---|---|---|---|---|
| | No.1 | Succinic acid (40.5) / Phthalic acid (24.4) | Ethylene glycol (28.7) | Ethylene glycol monobutyl ether (6.4) |
| | No.2 | Succinic acid (39.4) / Phthalic acid (23.7) | Ethylene glycol (27.8) | Diethylene glycol monobutyl ether (9.1) |
| | No.3 | Succinic acid (39.7) / Phthalic acid (23.9) | Ethylene glycol (28.0) | dipropylene glycol monometyl ether (8.4) |
| | No.4 | Adipic acid (44.2) / Terephthalic acid (21.5) | Ethylene glycol (25.0) | Diethylene glycol monobutyl ether (9.3) |
| | No.5 | Succinic acid (38.2) / Phthalic acid (23.0) | Ethylene glycol (13.5) / Propylene glycol (16.5) | Diethylene glycol monobutyl ether (8.8) |
| | No.6 | Succinic acid (15.8) / Adipic acid (19.6) / Phthalic acid (29.6) | Ethylene glycol (26.0) | Diethylene glycol monobutyl ether (9.0) |

Further, it is preferred that the acid value of the aforementioned polyester plasticizer be not more than 1.

The amount of the aforementioned polyester plasticizer in the present invention is 3 to 50 parts by mass, preferably 5 to 30 parts by mass, with respect to 100 parts by mass of the cellulose resin. The flexibility-imparting effect may not be attained when the amount of the aforementioned polyester plasticizer is less than 3 parts by mass, and bleeding may occur when the amount exceeds 50 parts by mass, which are not preferred.

Further, various additives, for example, phosphorous antioxidant, phenolic antioxidant or sulfur antioxidant, ultraviolet absorbing agent, hindered amine light stabilizer and the like may also be blended in the cellulose resin composition of the present invention.

Examples of the aforementioned phosphorous antioxidant include triphenyl phosphite, tris(2,4-di-tert-butylphenyl)phosphite, tris(nonylphenyl)phosphite, tris(dinonylphenyl)phosphite, tris(mono-, di-mixed nonylphenyl)phosphite, bis(2-tert-butyl-4,6-dimethylphenyl)·ethyl phosphite, diphenyl acid phosphite, 2,2'-methylene-bis(4,6-di-tert-butylphenyl)octyl phosphite, diphenyldecyl phosphite, phenyldiisodecyl phosphite, tributyl phosphite, tris(2-ethylhexyl)phosphite, tridecyl phosphite, trilauryl phosphite, dibutyl acid phosphite, dilauryl acid phosphite, trilauryl trithio phosphite, bis(neopenthyl glycol)·1,4-cyclohexanedimethyl diphosphite, bis(2,4-di-tert-butylphenyl) pentaerythritol diphosphite, bis(2,6-di-tert-butyl-4-methylphenyl)pentaerythritol diphosphite, distearyl pentaerythritol diphosphite, phenyl-4,4'-isopropylidene diphenol·pentaerythritol diphosphite, tetra(C12-C15 mixed alkyl)-4,4'-isopropylidene diphenyl phosphite, bis[2,2'-methylene-bis(4,6-diamylphenyl)]·isopropylidene diphenyl phosphite, hydrogenated-4,4'-isopropylidene diphenol polyphosphite, bis(octylphenyl)·bis[4,4'-n-butylidene-bis(2-tert-butyl-5-methylphenol)]·1,6-hexanediol·diphosphite, tetratridecyl·4,4'-butylidene-bis(2-tert-butyl-5-methylphenol)diphosphite, hexa(tridecyl)·1,1,3-tris(2-methyl-5-tert-butyl-4-hydroxyphenyl)butane·triphosphonite, 9,10-dihydro-9-oxa-10-phosphaphenanthrene-10-oxide and 2-butyl-2-ethyl-propanediol·2,4,6-tri-tert-butylphenol monophosphite.

Examples of the aforementioned phenolic antioxidant include 2,6-di-tert-butyl-p-cresol, 2,6-diphenyl-4-octadecyloxyphenol, stearyl(3,5-di-tert-butyl-4-hydroxyphenyl)propionate, distearyl(3,5-di-tert-butyl-4-hydroxybenzyl) phosphonate, tridecyl·3,5-di-tert-butyl-4-hydroxybenzyl thioacetate, thiodiethylene-bis[(3,5-di-tert-butyl-4-hydroxyphenyl) propionate], 4,4'-thiobis(6-tert-butyl-m-cresol), 2-octylthio-4,6-di(3,5-di-tert-butyl-4-hydroxyphenoxy)-s-triazine, 2,2'-methylene-bis(4-methyl-6-tert-butylphenol), bis[3,3-bis(4-hydroxy-3-tert-butylphenyl)butyric acid]glycol ester, 4,4'-butylidene-bis(4,6-di-tert-butylphenol), 2,2'-ethylidene-bis(4,6-di-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methyl benzyl)phenyl]terephthalate, 1,3,5-tris (2,6-dimethyl-3-hydroxy-4-tert-butylbenzyl) isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, tetrakis[methylene-3-(3,5-di-tert-butyl-4-hydroxyphenyl) propionate]methane, 2-tert-butyl-4-methyl-6-(2-acryloyloxy-3-tert-butyl-5-methylbenzyl)phenol, 3,9-bis[2-(3-tert-butyl-4-hydroxy-5-methylhydrocinnamoyloxy) -1,1-dimethylethyl]-2,4,8,10-tetraoxaspiro [5.5]undecane] and triethylene glycol-bis[β-(3-tert-butyl-4-hydroxy-5-methylphenyl)propionate].

Examples of the aforementioned sulfur antioxidant include dialkyl thiodipropionates, such as dilauryl thiodipropionate, dimyristyl thiodipropionate, myristylstearyl thiodipropionate and distearyl thiodipropionate, and β-alkylmercaptopropionates of polyols such as pentaerythritol tetra(β-dodecylmercaptopropionate).

Examples of the aforementioned ultraviolet absorbing agent include 2-hydroxybenzophenones such as 2,4-dihydroxybenzophenone, 2-hydroxy-4-methoxybenzophenone, 2-hydroxy-4-octoxybenzophenone, 2-hydroxy-4-tert-butyl-4'-(2-methacryloyloxyethoxyethoxy)benzophenone and 5,5'-methylene-bis(2-hydroxy-4-methoxybenzophenone); 2-(2-hydroxyphenyl)benzotriazoles such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3-dodecyl-5-methylphenyl)benzotriazole, 2-(2-hydroxy-3-tert-butyl-5-C7 to C9 mixed-alkoxycarbonylethylphenyl)triazole, 2-(2-hydroxy-3,5-dicumylphenyl)benzotriazole, 2,2'-methylene-bis(4-tert-octyl-6-benzotriazolylphenol) and polyethylene glycol ester of 2-(2-hydroxy-3-tert-butyl-5-carboxyphenyl)benzotriazole; 2-(2-hydroxyphenyl)-1,3,5-triazines such as 2-(2-hydroxy-4-hexyloxyphenyl)-4,6-diphenyl-1,3,5-triazine, 2-(2-hydroxy-4-methoxyphenyl)-4,6-diphenyl-1,3,5-triazine, 2-(2-hydroxy-4-octoxyphenyl)-4,6-bis(2,4-dimethylphenyl)-1,3 ,5-triazine and 2-(2-hydroxy-4-acryloyloxyethoxyphenyl)-4,6-bis(2,4-dimethylphenyl)-1,3,5-triazine; benzoates such as phenyl salicylate, resorcinol monobenzoate, 2,4-di-tert-butylphenyl-3,5-di-tert-butyl-4-hydroxybenzoate, 2,4-di-tert-amylphenyl-3,5-di-tert-butyl-4-hydroxybenzoate and hexadecyl-3,5-di-tert-butyl-4-hydroxybenzoate; substituted oxanilides such as 2-ethyl-2'-ethoxyoxanilide and 2-ethoxy-4'-dodecyloxanilide; and cyanoacrylates such as ethyl-α-cyano-β,β-diphenylacrylate and methyl-2-cyano-3-methyl-3-(p-methoxyphenyl)acrylate.

Examples of the aforementioned hindered amine light stabilizer include 2,2,6,6-tetramethyl-4-piperidylstearate, 1,2,2,6,6-pentamethyl-4-piperidylstearate, 2,2,6,6-tetramethyl-4-piperidylbenzoate, bis(2,2,6,6-tetramethyl-4-piperidyl) sebacate, bis(1,2,2,6,6-pentamethyl-4-piperidyl)sebacate, bis(1-octoxy-2,2,6,6-tetramethyl-4-piperidyl)sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, bis(2,2,6,6-tetramethyl-4-piperidyl)·bis(tridecyl)-1,2,3,4-butane tetracarboxylate, bis (1,2,2,6,6-pentamethyl-4-piperidyl)·bis(tridecyl)-1,2,3,4-butane tetracarboxylate, bis(1,2,2,6,6-pentamethyl-4-piperidyl)-2-butyl-2-(3,5-di-tert-butyl-4-hydroxybenzyl) malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/dibromoethane polycondensate, 1,6-bis (2,2,6,6-tetramethyl-4-piperidylamino)hexane/2,4-dichloro-6-morpholino-s-triazine polycondensate, 1,6-bis(2,2,6,6-tetramethyl-4-piperidylamino)hexaxne/2,4-dichloro-6-tert-octylamino-s-triazine polycondensate, 1,5,8,12-tetrakis[2,4-bis (N-butyl-N-(2,2,6,6-tetramethyl-4-piperidyl)amino)-s-triazine-6-yl]-1,5,8,12-tetraazadodecane, 1,5,8,12-tetrakis[2,4-bis (N-butyl-N-(1,2,2,6,6-pentamethyl-4 -piperidyl)amino)-s-triazine-6-yl]-1,5,8,12-tetraazadodecane, 1,6,11-tris[2,4-bis(N-butyl-N-(2,2,6,6-tetramethyl-4-piperidyl)amino)-s-triazine-6-ylamino]undecane, 1,6,11-tris[2,4-bis(N-butyl-N-(1,2,2,6,6-pentamethyl-4-piperidyl)amino)-s-triazine-6-ylamino]undecane, 3,9-bis[1,1-dimethyl-2-{tris(2,2,6,6-tetramethyl-4-piperidyloxycarbonyloxy)butylcarbonyloxy}ethyl]-2,4,8,10-tetraoxaspiro[5.5]undecane, and 3,9-bis[1,1-dimethyl-2-{tris (1,2,2,6,6-pentamethyl-4-piperidyloxycarbonyloxy) butylcarbonyloxy}ethyl]-2,4,8,10-tetraoxaspiro[5.5]undecane.

In addition to the above, as required, other additives may be blended with the cellulose resin composition of the present invention, and examples thereof include fillers, coloring agents, cross-linking agents, antistatic agents, anti-plate-out agents, surface treatment agents, lubricants, flame retardants, fluorescent agents, antifungal agents, antibacterial agents, metal inactivators, releasing agents, pigments, processing aids, antioxidants, light stabilizers and foaming agents.

The cellulose resin composition of the present invention can be used in a variety of applications by various known processing methods; however, because of the characteristics thereof, it is preferably used particularly as a cellulose resin film such as polarizing plate or protective film for polarizing plate.

The cellulose resin film of the present invention is obtained from the aforementioned cellulose resin composition. As an example, a method of producing a cellulose ester film which is obtained from a cellulose ester (hereinafter, may be referred to as "the cellulose ester film of the present invention") will be explained.

The cellulose ester film of the present invention is produced by applying and drying a dope solution in which a cellulose ester is dissolved in a solvent. Various additives may be added to the dope solution as required. The concentration of the cellulose ester in the dope solution is preferably high since it enables a reduction in the drying load after flow-casting the dope solution onto a substrate; however, when the concentration of the cellulose ester is too high, the filtering load is increased, thereby lowering the filtration accuracy. In order to attain reduction in both the drying load and filtering load, the concentration of the cellulose ester is preferably 10 to 30 mass%, more preferably 15 to 25 mass%.

The solvent for the preparation of the dope solution of the present invention may be used individually or in combination with another solvent; however, from the standpoint of the production efficiency, it is preferred to use a good solvent and poor solvent of cellulose ester in combination. Preferred ranges of the mixing ratio of the good solvent and poor solvent are 70 to 98 mass% for the good solvent and 30 to 2 mass% for the poor solvent. With regard to the good solvent and poor solvent used in the present invention, a solvent which independently dissolves the cellulose ester used is defined as a good solvent, while a solvent which, by itself, can only swell the cellulose ester used or cannot dissolve the cellulose ester used, is defined as a poor solvent. Therefore, the good solvent and poor solvent are variable depending on the average acetylation degree of cellulose. For example, acetone is a good solvent for cellulose esters having an average acetylation degree of 55%, while it is a poor solvent for cellulose esters having an average acetylation degree of 60%.

As clearly seen from the explanation in the above, the good solvent and poor solvent are not unambiguously determined in all cases; however, in cases where cellulose triacetate is used as the cellulose resin, organic halogenated compounds such as methylene chloride and dioxolanes are exemplified as the good solvent. In cases where the cellulose resin is cellulose acetate propionate, methylene chloride, acetone, methyl acetate and the like are exemplified as the good solvent, while examples of poor solvent include methanol, ethanol, n-butanol, cyclohexane and cyclohexanone.

A conventional method can be used as the method of dissolving cellulose ester in the preparation of the aforementioned dope solution; however, it is preferred to employ a method in which cellulose ester is dissolved with stirring by heating in a temperature range which is not lower than the boiling point of the solvent under atmospheric pressure and where the solvent does not boil, since such method prevents generation of aggregated non-dissolved matter called gel or lump. Further, a method in which cellulose ester is mixed with a poor solvent to wet or swell the cellulose ester followed by dissolution thereof by further mixing with a good solvent is also preferably employed. Furthermore, a known cooling dissolution method may also be employed. In cases where a cooling dissolution method is employed, methyl acetate or acetone may be used as the good solvent. Pressurization can be carried out by a method of injecting inert gas such as nitrogen gas or by increasing the vapor pressure of the solvent by heating. It is preferred that the heating be done externally. For example, a jacket-type heater is preferably used since the temperature control is easy.

From the standpoint of the solubility of cellulose esters, as the heating temperature after the addition of solvent, a temperature range which is not lower than the boiling point of the solvent used under atmospheric pressure and where the solvent does not boil is preferred; however, when the heating temperature is too high, the required pressure is increased, thereby lowering the productivity. The heating temperature range is preferably 45 to 120°C, more preferably 60 to 110°C, still more preferably 70 to 105°C. Further, the pressure is adjusted in such a manner that the solvent does not boil at the preset temperature.

Next, this cellulose ester solution is filtered using an appropriate filter medium such as filter paper. As the filter medium, a filter having a small absolute filtration accuracy is preferred in order to remove undesired matters and the like; however, an excessively small absolute filtration accuracy leads to a problem that clogging of the filter medium is likely to occur. In view of this, the absolute filtration accuracy of the filter medium is preferably not greater than 0.008 mm, more preferably in the range of 0.001 to 0.008 mm, still more preferably in the range of 0.003 to 0.006 mm. The material of the filter medium is not particularly restricted and any conventional material may be used; however, filter media made of plastic such as polypropylene or Teflon (Registered Trademark) and those made of metal such as stainless metal are preferred since they do not cause fiber fall-off or the like.

The filtration of dope solution can be carried out by a conventional method; however, it is preferred to employ a method in which the dope solution is filtered under pressure while being heated at a temperature range which is not lower than the boiling point of the solvent used under atmospheric pressure and where the solvent does not boil, since such method achieves only a small increase in the difference between the pressures on each side of the filter medium (hereinafter, may be referred to as filtration pressure). The filtration temperature is preferably 45 to 120°C, more preferably 45 to 70°C, still more preferably 45 to 55°C. A smaller filtration pressure is preferred. The filtration pressure is preferably not higher than $1.6 \times 10^6$ Pa, more preferably not higher than $1.2 \times 10^6$ Pa, still more preferably not higher than $1.0 \times 10^6$ Pa.

As the substrate used in the flow-casting (casting) step, those of mirror-finished stainless steel in the shape of an endless belt or drum are preferred. It is preferred that the temperature of the substrate used in the casting step be 0°C to below the boiling point of the solvent. A higher temperature enables a faster drying speed; however, an excessively high temperature may cause foaming and deteriorate the flatness of the substrate surface. The substrate temperature is preferably 0 to 50°C, more preferably 5 to 30°C. The method to control the substrate temperature is not particularly restricted; however, a method in which warm air or cool air is blown onto the substrate or a method in which a warm-water vat is brought into contact with the substrate may be employed. Among these two methods, the method of using a warm-water vat is more preferable since the heat transfer is more efficient and the time required to bring the substrate temperature constant is shorter. In cases where warm air is used, it is necessary that the temperature of the air be higher than the target temperature. In order to allow the cellulose ester film to exhibit a good surface flatness, the amount of remaining solvent at the time of film removal from the substrate is preferably 10 to 120%, more preferably 20 to 40% or 60 to 120%, and especially preferably 20 to 30% or 70 to 115%.

In the present invention, the amount of remaining solvent is defined by the following formula:

$$\text{The amount of remaining solvent} = [(\text{film mass before heat treatment} - \text{film mass after heat treatment}) / (\text{film mass after heat treatment})] \times 100\ (\%).$$

Here, the heat treatment in the measurement of the amount of remaining solvent refers to heating of the film at 115°C for 1 hour. Further, in the step of drying the cellulose ester film, the film removed from the substrate is further dried in such a manner the amount of remaining solvent becomes preferably not more than 3 mass%, more preferably not more than 0.5 mass%. Generally employed in the film drying step is a method in which the film is dried while being carried by a roll suspension method or tenter method.

Further, it is preferred that the maintenance of the film width and film drawing be carried out by a tenter method while a large amount of solvent still remains immediately after removing the film from the substrate, since this enables the film to demonstrate a superior dimensional stability improving effect. The means for drying the film is not particularly restricted, and it is carried out with hot air, infrared radiation, heating roller, microwave or the like. It is preferred to use hot air from the standpoint of simplicity. It is preferred that the drying temperature be stepwise increased in the range of 40 to 150°C, and in order to improve the dimensional stability, it is more preferred that the drying be carried out at a temperature of 50 to 140°C.

It is preferred that the cellulose ester film have a less thickness since the resulting polarizing plate would be thinner and thus the thinning of liquid crystal display would be easier; however, an excessively thin cellulose ester film leads to an increase in the moisture permeability, thereby making the tearing strength and the like insufficient. In order to attain both low moisture permeability and sufficient tearing strength, the thickness of the cellulose ester film is preferably 10 to 65 μm, more preferably 20 to 60 μm, still more preferably 35 to 50 μm.

Since the cellulose ester film of the present invention can attain a low moisture permeability and high dimensional stability and the like, it is preferably used as a liquid crystal display member. A liquid crystal display member refers to a member used in a liquid crystal display device and examples thereof include polarizing plate, protective film for polarizing plate, phase plates, reflective plates, viewing angle-improving films, antiglare films, non-reflective films, antistatic films and the like. Thereamong, the cellulose ester film of the present invention is preferably used for a polarizing plate and protective film for polarizing plate.

The polarizing plate can be produced by a conventional method. For example, there is a method in which the cellulose ester film of the present invention is subjected to an alkaline saponification treatment and subsequently, using a completely saponificated polyvinyl alcohol solution, the resultant is pasted onto both sides of a polarizing film produced by immersion in an iodine solution and drawing therefrom. The alkaline saponification treatment refers to a treatment in which cellulose ester film is immersed in a hot strong alkaline solution in order to improve the wetting of water-based adhesive and its adhesive property.

The smaller the retardation Ro (nm) in the film plane direction of the aforementioned cellulose ester film, the more preferable it is. The retardation Ro (nm) is preferably not greater than 100 nm, more preferably not greater than 10 nm, and still more preferably not greater than 5 nm. In cases where the cellulose ester film of the present invention is used as a retarder film, the Ro (nm) thereof is preferably 50 to 1,000 nm. As for the determination of the retardation Ro, the three-dimensional refractive index of the cellulose ester film at a wavelength of 590 nm is measured using an automatic double refractometer to determine the retardation axis angle $\theta_1$ and refractive indices Nx and Ny, and the retardation Ro in the film plane direction is then calculated according to the following formula:

$$\text{Ro} = (\text{Nx} - \text{Ny}) \times d.$$

In this formula, Nx, Ny and d represent, respectively, the film refractive index in the direction parallel to the film-forming direction, the film refractive index in the direction perpendicular to the film-forming direction, and the film thickness (nm).

In cases where the cellulose ester film of the present invention is used as an optical film, the closer the angle

$\theta_0$ between the film-forming direction (this corresponds to the film longitudinal direction) and the film retardation axis is to 0°, +90° or -90°, the more preferable it is. The angle $\theta_0$ contributes to an improvement of the degree of polarization of the resulting polarizing plate, especially when the cellulose ester film of the present invention is used as a protective film for polarizing plate. Here, the retardation axis means the direction in which the refractive index in the film surface is the highest. Further, it is preferred that the $\theta_1$ (radian) ($\theta_1$ is obtained by converting the $\theta_0$ into a radian expression) and the retardation $R_o$ in the film plane direction satisfy the relation represented by the following formula:

$$p \le 1 - \sin^2(2\theta_1) \cdot \sin^2(\pi R_o / \lambda).$$

The p is preferably not less than 0.99900, more preferably not less than 0.99990, still more preferably not less than 0.99995, and especially preferably not less than 0.99999. The $\lambda$ represents the wavelength (nm) of the light, which is in the range of 380 to 650 nm, used in the measurement of the three-dimensional refractive-index for determining the Ro and $\theta_1$. The above formula is satisfied preferably when $\lambda$ is 590 nm, more preferably when $\lambda$ is 400 nm.

EXAMPLES

The cellulose resin composition of the present invention will be described in more detail by way of Examples; however, the present invention is not limited thereto. Examples 1-1 to 1-6 and Comparative Examples 1-1 to 1-6

Acetylcellulose (acetylation degree of 61.5%, polymerization degree of 260) was dissolved with stirring into a mixed solvent comprising 90 parts by mass of methylene chloride and 10 parts by mass of methyl alcohol to obtain a solution having a concentration of 15%. Mixed therewith was the plasticizer according to Table 3 below at an amount of 10 mass% with respect to the acetylcellulose, and the thus obtained solution was flow-casted onto a metal substrate to produce a film having a thickness of approximately 0.1 mm. It should be noted here that the plasticizers Nos. 1 to 6 in Table 3 correspond to those in Tables 1 and 2 and that the plasticizers Nos. A to F correspond to those in Tables 4 and 5 below. Further, in Table 4, the numbers in parentheses under the mixtures represent the molar ratio, while in Table 5, the numbers in parentheses represent the ratio of polybasic acid, polyalcohol, and alcohol or carboxylic acid of polyester plasticizer. The units of these numbers are all in mass%.

Next, using the thus obtained films (samples), various performance tests described in the following were carried out. The results thereof are together shown in Table 3 below.

(Evaluation of bleeding)

The samples were cut into a size of 10 cm × 10 cm, left to stand for a day at 23°C and 55% RH, and then left to stand for 2 weeks under a condition of 80°C and 90% RH. The thus cut samples were further left to stand for a day at 23°C and 55% RH and thereafter, the bleeding on the sample surface was visually observed. The evaluation was carried out in accordance with the three criteria in the following.
○; no bleeding
△; some bleeding
×; extensive bleeding
(Evaluation of mass loss by moist-heat treatment)

The mass change before and after the moist treatment was measured and the mass loss by moist-heat treatment (%) was determined using the following formula:

Mass loss by moist-heat treatment (%) = [(A-B) / A] × 100. In the above formula, A represents the mass before the moist treatment and B represents the mass after the moist treatment. From the standpoint of the stabilities in the physical properties and dimension of the cellulose resin composition, it is preferred that the mass loss by moist-heat treatment be less than 1%.

(Evaluation of moisture permeability)

The moisture permeability was measured in accordance with the method described in JIS Z 0208. The measurement condition was set at 25°C and 90% RH. In order to prevent the adhesive and polarizer from being deteriorated by moisture, the moisture permeability is preferably not higher than 300 g/m$^2$, more preferably not higher than 200 g/m$^2$, still more preferably not higher than 150 g/m$^2$.

[Table 3]

|  | Plasticizer | Bleeding | Mass loss by moist-heat treatment | Moisture permeability |
|---|---|---|---|---|
| Example 1-1 | No.1 | ○ | 0.2 | 118 |
| Example 1-2 | No.2 | ○ | 0.2 | 125 |
| Example 1-3 | No.3 | ○ | 0.3 | 129 |
| Example 1-4 | No.4 | ○ | 0.2 | 124 |
| Example 1-5 | No.5 | ○ | 0.3 | 125 |
| Example 1-6 | No.6 | ○ | 0.4 | 127 |
| Comparative Example 1-1 | No.A | Δ | 0.5 | 268 |
| Comparative Example 1-2 | No.B | × | 0.8 | 221 |
| Comparative Example 1-3 | No.C | × | 0.8 | 227 |
| Comparative Example 1-4 | No.D | ○ | 0.3 | 148 |
| Comparative Example 1-5 | No.E | ○ | 0.2 | 144 |
| Comparative Example 1-6 | No.F | × | 0.2 | 125 |

[Table 4]

|  | Polybasic acid | Polyalcohol | Alcohol, Carboxylic acid | AV | OHV | Mw |
|---|---|---|---|---|---|---|
| No.A | Succinic acid | Ethylene glycol | - | 0.3 | 37 | 3000 |
| No.B | Succinic acid | Ethylene glycol | 2-ethyl hexanol | 0.2 | 7 | 3000 |
| No.C | Succinic acid | Ethylene glycol | 2-ethyl hexylic acid | 0.6 | 18 | 3000 |
| No.D | Succinic acid | Ethylene glycol | Ethylene glycol monobutyl ether | 0.2 | 13 | 3000 |
| No.E | Succinic acid / Phthalic acid (95/5) | Ethylene glycol | Diethylene glycol monobutyl ether | 0.2 | 13 | 3000 |
| No.F | Succinic acid / Phthalic acid (20/80) | Ethylene glycol | Diethylene glycol monobutyl ether | 0.3 | 12 | 3000 |

[Table 5]

|  | Polybasic acid | Polyalcohol | Alcohol, Carboxylic acid |
|---|---|---|---|
| No.A | Succinic acid (64.4) | Ethylene glycol (35.6) | - |
| No.B | Succinic acid (62.0) | Ethylene glycol (30.9) | 2-ethyl hexanol (7.1) |
| No.C | Succinic acid (59.5) | Ethylene glycol (32.9) | 2-ethyl hexylic acid (7.6) |
| No.D | Succinic acid (62.5) | Ethylene glycol (31.2) | Ethylene glycol monobutyl ether (6.3) |
| No.E | Succinic acid (57.1) / Phthalic acid (4.2) | Ethylene glycol (29.9) | Diethylene glycol monobutyl ether (8.8) |
| No.F | Succinic acid (10.0) / Phthalic acid (56.3) | Ethylene glycol (24.5) | Diethylene glycol monobutyl ether (9.2) |

When the polyester plasticizer obtained from only dibasic acid and polyalcohol was used (Comparative Example 1-1), some bleeding occurred and the moisture-permeability improving effect was not sufficient. Bleeding was extensive and the moisture-permeability improving effect was not sufficient when the polyester plasticizer obtained from dibasic acid, polyalcohol and monoalcohol was used (Comparative Example 1-2), when the polyester plasticizer obtained from dibasic acid, polyalcohol and monocarboxylic acid was used (Comparative Example 1-3), and when the amount of aromatic dicarboxylic acid in the polybasic acid was larger than 70 mol% (Comparative Example 1-6). Further, when the polyester plasticizer obtained from dibasic acid, polyalcohol and ether-alcohol by using an aliphatic dicarboxylic acid as the dibasic acid was used (Comparative Example 1-4) and when the amount of aromatic dicarboxylic acid in the polybasic acid was less than 10 mol% (Comparative Example 1-5), the moisture-permeability improving effect was improved with no bleeding and only a small mass loss by moist-heat treatment; however, the moisture permeability was inferior compared to Examples 1-1 to 1-6 and therefore, the film was still not satisfactory. In cases where the polyester plasticizer obtained from dibasic acid, polyalcohol and ether-alcohol by using an aromatic dicarboxylic acid as the dibasic acid was used (Examples 1-1 to 1-6), a film having no bleeding, a small mass loss by moist-heat treatment and a good retainability, as well as a superior moisture-permeability improving effect, could be obtained.

**Claims**

1.  A cellulose resin composition, which is obtained by adding (A) polyester plasticizer to a cellulose resin, wherein said (A) polyester plasticizer is obtained by allowing a polybasic acid, polyalcohol and ether-alcohol to react and 10 to 70 mol% of said polybasic acid is an aromatic dicarboxylic acid.

2.  The cellulose resin composition according to claim 1, wherein the mass ratios of said polybasic acid, polyalcohol and ether-alcohol in said (A) polyester plasticizer are 10 to 80 mass%, 10 to 80 mass% and 1 to 50 mass%, respectively.

3.  The cellulose resin composition according to claim 1 or 2, wherein said (A) polyester plasticizer is added in an amount of 3 to 50 parts by mass, preferably 5 to 30 parts by mass with respect to 100 parts by mass of said cellulose resin.

4.  The cellulose resin composition according to any preceding claim, wherein said cellulose resin is cellulose triacetate.

5.  The cellulose resin composition according to any of claims 1 to 3, wherein said cellulose resin is cellulose acetate propionate.

6.  The cellulose resin composition according to any preceding claim, wherein the polybasic acid is aliphatic dibasic acid preferably malonic acid, succinic acid, glutaric acid, adipic acid, sebacic acid, azelaic acid or dodecane dicarboxylic acid used individually or in combination.

7.  The cellulose resin composition according to any preceding claim, wherein 20 to 50 mol % of said polybasic acid is an aromatic dicarboxylic acid.

8.  The cellulose resin composition according to any preceding claim wherein the aromatic dicarboxylic acid is phthalic acid, isophthalic acid, terephthalic acid, naphthalene dicarboxylic acid or these aromatic dicarboxylic acids substituted with a lower alkyl group.

9.  The cellulose resin composition according to any preceding claim wherein the polyalcohol is ethylene glycol, diethylene glycol, 1,2-propanediol, 1,3-propanediol, 2-methyl-1,3-propanediol, 2,2-dimethyl-1,3-propanediol, 2,2-diethyl-1,3-propanediol, 1,2-butanediol, 1,3-butanediol, 1,4-butanediol, 1,5-pentanediol, 1,5-hexanediol, 1,6-hexanediol, 3-methyl-1,5-pentanediol, 2-ethyl-1,3-hexanediol or 2,2,4-trimethyl-1,3-pentanediol, used individually or in combination.

10. A cellulose resin film, which is obtained from the cellulose resin composition according to any preceding claim.

11. The cellulose resin film of claim 10 wherein the film is a cellulose ester film.

12. The cellulose ester film of claim 11 wherein the thickness of the film is 10 to 65 $\mu$m, preferably 20 to 60 $\mu$m, more preferably 35 to 50 $\mu$m.

13. A polarizing plate or protective film for polarizing plate comprising the cellulose resin film of any of claims 10 to 12.

**Patentansprüche**

1. Celluloseharz-Zusammensetzung, die durch Zufügen von (A) Polyesterweichmacher zu einem Celluloseharz erhalten wird, wobei der Polyesterweichmacher (A) durch das Reagieren lassen einer mehrbasischen Säure, eines Polyalkohols und eines Etheralkohols erhalten wird und 10 bis 70 Mol% der mehrbasischen Säure eine aromatische Dicarbonsäure sind.

2. Celluloseharz-Zusammensetzung nach Anspruch 1, wobei die Massenverhältnisse der mehrbasischen Säure, des Polyalkohols und des Etheralkohols in dem Polyesterweichmacher (A) 10 bis 80 Masse%, 10 bis 80 Masse% bzw. 1 bis 50 Masse% betragen.

3. Celluloseharz-Zusammensetzung nach Anspruch 1 oder 2, wobei der Polyesterweichmacher (A) in einer Menge von 3 bis 50 Masseteilen, bevorzugt 5 bis 30 Masseteilen bezogen auf 100 Masseteile des Celluloseharzes zugefügt wird.

4. Celluloseharz-Zusammensetzung nach einem vorangehenden Anspruch, wobei das Celluloseharz Cellulosetriacetat ist.

5. Celluloseharz-Zusammensetzung nach einem der Ansprüche 1 bis 3, wobei das Celluloseharz Celluloseacetatpropionat ist.

6. Celluloseharz-Zusammensetzung nach einem vorangehenden Anspruch, wobei die mehrbasische Säure eine aliphatische dibasische Säure, bevorzugt Malonsäure, Bernsteinsäure, Glutarsäure, Adipinsäure, Sebacinsäure, Azelainsäure oder Dodecandicarbonsäure, individuell oder in Kombination verwendet, ist.

7. Celluloseharz-Zusammensetzung nach einem vorangehenden Anspruch, wobei 20 bis 50 Mol% der mehrbasischen Säure eine aromatische Dicarbonsäure sind.

8. Celluloseharz-Zusammensetzung nach einem vorangehenden Anspruch, wobei die aromatische Dicarbonsäure Phthalsäure, Isophthalsäure, Terephthalsäure, Naphthalendicarbonsäure oder diese aromatischen Dicarbonsäuren, substituiert mit einer niederen Alkylgruppe, ist.

9. Celluloseharz-Zusammensetzung nach einem vorangehenden Anspruch, wobei der Polyalkohol Ethylenglykol, Diethylenglykol, 1,2-Propandiol, 1,3-Propandiol, 2-Methyl-1,3-propandiol, 2,2-Dimethyl-1,3-propandiol, 2,2-Diethyl-1,3-propandiol, 1,2-Butandiol, 1,3-Butandiol, 1,4-Butandiol, 1,5-Pentandiol, 1,5-Hexandiol, 1,6-Hexandiol, 3-Methyl-1,5-pentandiol, 2-Ethyl-1,3-hexandiol oder 2,2,4-Trimethyl-1,3-pentandiol, individuell oder in Kombination verwendet, ist.

10. Celluloseharzfolie, die aus der Celluloseharz-Zusammensetzung nach einem vorangehenden Anspruch erhalten wird.

11. Celluloseharzfolie nach Anspruch 10, wobei die Folie eine Celluloseesterfolie ist.

12. Celluloseharzfolie nach Anspruch 11, wobei die Dicke der Folie 10 bis 65 $\mu$m, bevorzugt 20 bis 60 $\mu$m, bevorzugter 35 bis 50 $\mu$m beträgt.

13. Polarisierende Platte oder Schutzfolie für die polarisierende Platte, umfassend die Celluloseharzfolie nach einem der Ansprüche 10 bis 12.

**Revendications**

1. Composition de résine de cellulose qui est obtenue par addition (A) d'un plastifiant de polyester à une résine de cellulose, dans laquelle ledit plastifiant de polyester est obtenu en laissant réagir un acide polybasique, un polyalcool et un éther-alcool et 10 à 70 % en moles dudit acide polybasique est un acide dicarboxylique aromatique.

2. Composition de résine de cellulose selon la revendication 1, dans laquelle les rapports de masse dudit acide polybasique, du polyalcool et de l'éther-alcool dans ledit (A) plastifiant de polyester sont de 10 à 80 % en masse et de 1 à 50 % en masse, respectivement.

**3.** Composition de résine de cellulose selon la revendication 1 ou 2, dans laquelle ledit (A) plastifiant de polyester est ajouté selon une quantité de 3 à 50 parties en masse, de préférence de 5 à 30 parties en masse par rapport à 100 parties en masse de ladite résine de cellulose.

**4.** Composition de résine de cellulose selon l'une quelconque des revendications précédentes, dans laquelle ladite résine de cellulose est du triacétate de cellulose.

**5.** Composition de résine de cellulose selon l'une quelconque des revendications 1 à 3, dans laquelle ladite résine de cellulose est de l'acétopropionate.

**6.** Composition de résine de cellulose selon l'une quelconque des revendications précédentes, dans laquelle l'acide polybasique est de l'acide dibasique aliphatique, de préférence de l'acide malonique, de l'acide succinique, de l'acide glutarique, de l'acide adipique, de l'acide sébacique, de l'acide azélaïque ou de l'acide dodécane dicarboxylique utilisés individuellement ou en association.

**7.** Composition de résine de cellulose selon l'une quelconque des revendications précédentes, dans laquelle 20 à 50 % en moles dudit acide polybasique est un acide dicarboxylique aromatique.

**8.** Composition de résine de cellulose selon l'une quelconque des revendications précédentes, dans laquelle l'acide dicarboxylique est de l'acide phtalique, de l'acide isophtalique, de l'acide téréphtalique, de l'acide naphtalène dicarboxylique ou ces acides dicarboxyliques aromatiques substitués par un groupe alkyle inférieur.

**9.** Composition de résine de cellulose selon l'une quelconque des revendications précédentes dans laquelle le polyalcool est éthylène glycol, diéthylène glycol, 1,2-propanédiol, 1,3-propanédiol, 2-méthyl-1,3-propanédiol, 2,2-diméthyl-1,3-propanédiol, 2,2-diéthyl-1,3-prpanédiol, 1,2-butanédiol, 1,3-butanédiol, 1,4-butanédiol, 1,5-pentanédiol, 1,5-hexanédiol, 1,6-hexanédiol, 3-méthyl-1,5-pentanédiol, 2-éthyl-1,3-hexanédiol ou 2,2,4-triméthyl-1,3-pentanédiol utilisés individuellement ou en association.

**10.** Film de résine de cellulose, qui est obtenu à partir de la composition de résine de cellulose selon l'une quelconque des revendications précédentes.

**11.** Film de résine de cellulose selon la revendication 10, dans laquelle le film est un film d'ester de cellulose.

**12.** Film d'ester de cellulose selon la revendication 11, dans lequel l'épaisseur du film est de 10 à 65 $\mu$m, de préférence de 20 à 60 $\mu$m, idéalement de 35 à 50 $\mu$m.

**13.** Plaque polarisante ou film protecteur pour plaque polarisante comprenant le film de résine de cellulose selon l'une quelconque des revendication 10 à 12.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 53040039 A
- JP 54071141 A
- JP 11092574 A
- JP 11124445 A
- JP 11246704 A
- JP 2000063560 A
- JP 10045804 A
- JP 8231761 A
- US 2319052 A